# EUROPEAN PATENT APPLICATION

(11) **EP 4 559 609 A1**
(43) Date of publication of application: **28.05.2025**
(21) Application number: 22958700.1
(22) Date of filing: 12.09.2022
(51) Int. Cl.: B23H 1/10

(54) **WATER SUPPLYING DEVICE AND CONTROL METHOD FOR WATER SUPPLYING DEVICE**

(71) Applicant: FANUC CORPORATION, Oshino-mura Minamitsuru-gun Yamanashi 401-0597 (JP)
(72) Inventor: KASAI, Hirotsugu, Minamitsuru-gun, Yamanashi 401-0597 (JP); MAKINO, Yoshinori, Minamitsuru-gun, Yamanashi 401-0597 (JP)
(74) Representative: Keil & Schaafhausen Patentanwälte PartGmbB
(86) International application number: PCT/JP2022/034066
(87) International publication number: WO 2024/057365

(57) **Abstract**

According to an aspect of the present disclosure, a water supplying device (16) automatically supplies water to a wire discharge working machine (10), and includes: a first water supplying path (50) for supplying water from outside of the wire discharge working machine (10) to a pure water tank (22) of the wire discharge working machine (10); a first valve (52) for opening/closing the first water supply path (50); a second water supplying path (56) for supplying water from outside of the wire discharge working machine (10) to an ion exchange unit (24); a second valve (58) for opening/closing the second water supply path (56); and a circulation path (40) for sending a working liquid from the ion exchange unit (24) to the pure water tank (22).

## Description

### TECHNICAL FIELD

The present disclosure relates to a water supply device (water supplying device) and a control method for a water supply device (water supplying device).

### BACKGROUND ART

JP H05-002816 U discloses a working fluid supply device for a wire electric discharge machine. The working fluid supply device automatically supplies tap water when the working fluid in the wire electric discharge machine decreases.

### SUMMARY OF THE INVENTION

When tap water is added to the working fluid, the resistivity value [Ωm] of the working fluid decreases. Therefore, it is necessary to circulate the working fluid between the clean water tank and the ion exchange resin to increase the resistivity value of the working fluid. In recent years, there is a demand for a more favorable water supply device and a control method for the water supply device.

A first aspect of the present disclosure is characterized by a water supply device for automatically supplying water to an electric discharge machine, the water supply device including: a first water supply path configured to supply water from an outside of the electric discharge machine to at least one of a clean water tank, a sewage tank, or a work pan of the electric discharge machine; a first valve configured to open and close the first water supply path; a second water supply path configured to supply water from the outside of the electric discharge machine to an ion exchange unit including an ion exchange resin provided in the electric discharge machine; a second valve configured to open and close the second water supply path; and a circulation path configured to send a working fluid from the ion exchange unit to the clean water tank.

A second aspect of the present disclosure is characterized by a method for controlling a water supply device that automatically supplies water to an electric discharge machine, wherein the water supply device includes: a first water supply path configured to supply water from an outside of the electric discharge machine to at least one of a clean water tank, a sewage tank, or a work pan of the electric discharge machine; a first valve configured to open and close the first water supply path; a second water supply path configured to supply water from the outside of the electric discharge machine to an ion exchange unit including an ion exchange resin provided in the electric discharge machine; a second valve configured to open and close the second water supply path; and a circulation path configured to send a working fluid from the ion exchange unit to the clean water tank, the method including: a resistivity value acquisition step of acquiring a resistivity value of the working fluid; a sewage tank liquid level acquisition step of acquiring a liquid level in the sewage tank; a work pan liquid level acquisition step of acquiring a liquid level in the work pan; and a control step of opening and closing the first valve and the second valve, based on the resistivity value, the liquid level in the sewage tank, and the liquid level in the work pan.

### BRIEF DESCRIPTION OF DRAWINGS

[FIG. 1] FIG. 1 is a schematic diagram showing a wire electric discharge machine;
[FIG. 2] FIG. 2 is a block diagram of a water supply control unit;
[FIG. 3] FIG. 3 is a flowchart showing a water supply control process executed by the water supply control unit;
[FIG. 4] FIG. 4 is a flowchart showing a water supply control process executed by the water supply control unit;
[FIG. 5] FIG. 5 is a flowchart showing a water supply control process executed by the water supply control unit;
[FIG. 6] FIG. 6 is a schematic diagram showing a wire electric discharge machine; and
[FIG. 7] FIG. 7 is a schematic diagram showing a wire electric discharge machine.

### DETAILED DESCRIPTION OF THE INVENTION

When a working fluid (dielectric working fluid) in an electric discharge machine decreases, water is supplied to the electric discharge machine from the outside of the electric discharge machine. When water is added to the working fluid, the resistivity value [Ωm] of the working fluid decreases. Thus, before electric discharge machining is started, it is necessary to increase the resistivity value [Ωm] of the working fluid by circulating the working fluid between a clean water tank and an ion exchange resin. As a result, there is a problem that a period of time from when water is added to the working fluid to when electric discharge machining is started lengthens. An object of the present disclosure is to shorten the period of time from when water is added to the working fluid to when electric discharge machining is started.

In the present disclosure, the description is given using the resistivity value [Ωm], but the conductivity [S/m] may be used instead of the resistivity value [Ωm]. When water is added to the working fluid, the conductivity [S/m] of the working fluid increases. The conductivity [S/m] is the reciprocal of the resistivity value [Ωm]. That is, increasing the resistivity value [Ωm] is synonymous with decreasing the conductivity [S/m].

### [First Embodiment]

### [Configuration of Wire Electric Discharge Machine]

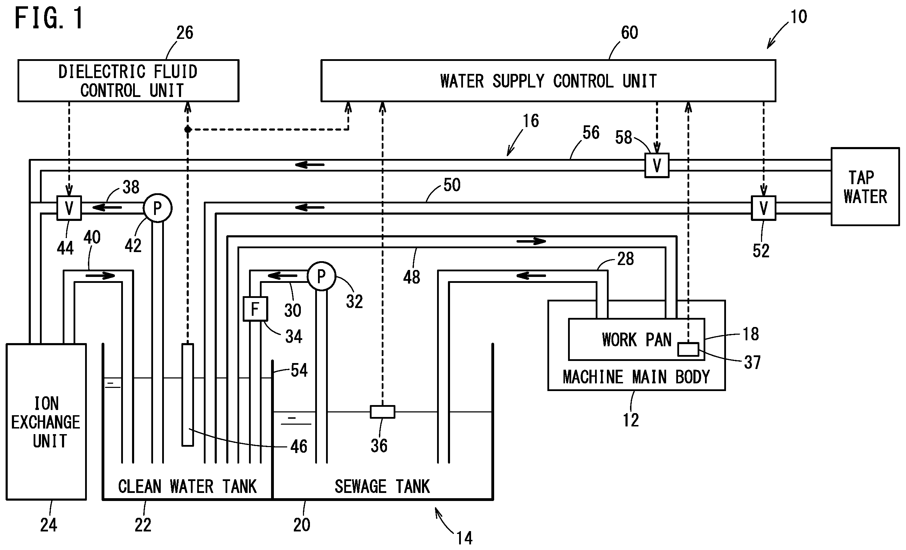

FIG. 1 is a schematic diagram showing a wire electric discharge machine 10. The wire electric discharge machine 10 includes a machine main body 12, a dielectric fluid unit 14, and a water supply device 16. The wire electric discharge machine 10 corresponds to an electric discharge machine of the present invention.

The machine main body 12 includes a work pan 18. The machine main body 12 performs electric discharge machining on a workpiece in a state in which the working fluid is stored in the work pan 18.

The dielectric fluid unit 14 has a sewage tank 20, a clean water tank 22, an ion exchange unit 24, and a dielectric fluid control unit 26.

The sewage tank 20 is connected to the work pan 18 via a drainage path 28. The working fluid is discharged from the work pan 18 to the sewage tank 20. The working fluid discharged from the work pan 18 to the sewage tank 20 contains sludge and the like generated during electric discharge machining of the workpiece.

The sewage tank 20 is connected to the clean water tank 22 via a filtration path 30. The filtration path 30 is provided with a first pump 32 and a filter 34. The first pump 32 pumps up the working fluid in the sewage tank 20 and sends it to the clean water tank 22. The filter 34 filters the working fluid sent from the sewage tank 20 to the clean water tank 22, and removes sludge and the like from the working fluid.

A sewage tank liquid level measurement unit 36 is provided in the sewage tank 20. The sewage tank liquid level measurement unit 36 measures the liquid level of the working fluid stored in the sewage tank 20.

The work pan 18 is provided with a work pan liquid level measurement unit 37. The work pan liquid level measurement unit 37 measures the liquid level of the working fluid stored in the work pan 18.

The clean water tank 22 is connected to the ion exchange unit 24 via a first circulation path 38 and a second circulation path 40. A second pump 42 and a circulation valve 44 are provided in the first circulation path 38. The working fluid in the clean water tank 22 is sent to the ion exchange unit 24 through the first circulation path 38. The working fluid that has passed through the ion exchange resin inside the ion exchange unit 24 is returned to the clean water tank 22 by the second circulation path 40. The second circulation path 40 corresponds to a circulation circuit of the present invention.

The clean water tank 22 is provided with a resistivity value measurement unit 46. The resistivity value measurement unit 46 measures the resistivity value [Ωm] of the working fluid stored in the clean water tank 22.

The ion exchange unit 24 has an ion exchange resin therein. The second pump 42 circulates the working fluid between the clean water tank 22 and the ion exchange unit 24. The ion exchange resin exchanges ions contained in the working fluid passing through the ion exchange resin with other ions. This increases the resistivity value [Ωm] of the working fluid.

The work pan 18 is connected to the clean water tank 22 via a working fluid supply path 48. The work pan 18 is supplied with the working fluid whose resistivity value [Ωm] has been adjusted.

The circulation valve 44 adjusts the amount of working fluid circulating between the clean water tank 22 and the ion exchange unit 24.

The dielectric fluid control unit 26 controls the circulation valve 44 based on the resistivity value [Ωm] of the working fluid in the clean water tank 22. The resistivity value [Ωm] of the working fluid in the clean water tank 22 is maintained at a predetermined value by the dielectric fluid control unit 26 controlling the opening degree or opening time of the circulation valve 44. The function of the dielectric fluid control unit 26 may be incorporated into a numerical control device that controls the machine main body 12.

The water supply device 16 includes a first water supply path 50, a second water supply path 56, and a water supply control unit 60.

The first water supply path 50 is connected to the clean water tank 22. Tap water is supplied to the clean water tank 22 from the outside of the wire electric discharge machine 10 via the first water supply path 50. A first valve 52 is provided in the first water supply path 50. The first valve 52 adjusts the amount of tap water supplied to the clean water tank 22. When tap water is supplied to the clean water tank 22 in a state where the clean water tank 22 is full of the working fluid, the working fluid in the clean water tank 22 flows into the sewage tank 20 over a partition plate 54 between the clean water tank 22 and the sewage tank 20.

The second water supply path 56 is connected to the ion exchange unit 24. Tap water is supplied to the ion exchange unit 24 from the outside of the wire electric discharge machine 10 via the second water supply path 56. The second water supply path 56 is provided with a second valve 58. The second valve 58 adjusts the amount of tap water supplied to the ion exchange unit 24.

Water supplied from the outside of the wire electric discharge machine 10 is not limited to tap water, and may be groundwater or the like.

The water supply control unit 60 controls the first valve 52 and the second valve 58 based on the resistivity value [Ωm] of the working fluid in the clean water tank 22 and the liquid level of the sewage tank 20. The water supply control process performed by the water supply control unit 60 will be described in detail later. The function of the water supply control unit 60 may be incorporated into a numerical control device that controls the machine main body 12.

### [Configuration of Water Supply Control Unit]

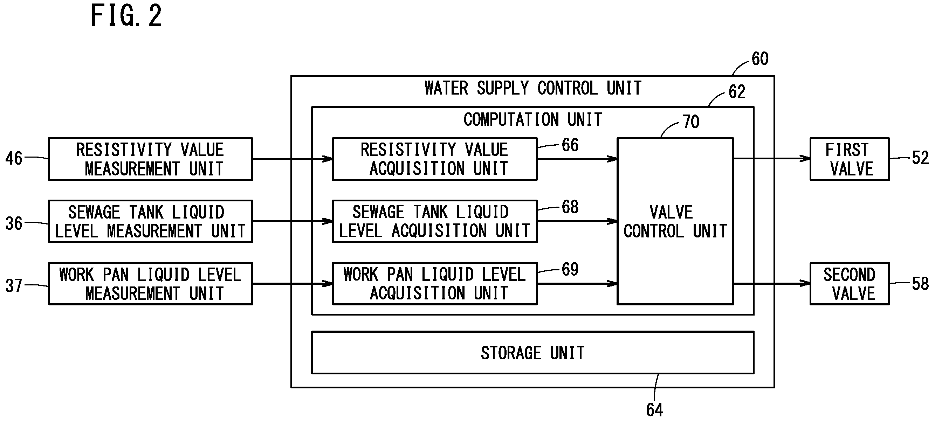

FIG. 2 is a block diagram of the water supply control unit 60. The water supply control unit 60 includes a computation unit 62 and a storage unit 64. The computation unit 62 includes a processor, for example, such as a CPU (Central Processing Unit), a GPU (Graphics Processing Unit), or the like. The computation unit 62 includes a resistivity value acquisition unit 66, a sewage tank liquid level acquisition unit 68, a work pan liquid level acquisition unit 69, and a valve control unit 70. The resistivity value acquisition unit 66, the sewage tank liquid level acquisition unit 68, the work pan liquid level acquisition unit 69, and the valve control unit 70 are realized by the computation unit 62 executing a program stored in the storage unit 64. At least a part of the resistivity value acquisition unit 66, the sewage tank liquid level acquisition unit 68, the work pan liquid level acquisition unit 69, and the valve control unit 70 may be realized by an integrated circuit such as an ASIC (application specific integrated circuit) or a FPGA (field-programmable gate array). At least a part of the resistivity value acquisition unit 66, the sewage tank liquid level acquisition unit 68, the work pan liquid level acquisition unit 69, and the valve control unit 70 may be realized by an electronic circuit including a discrete device.

The storage unit 64 is configured by a volatile memory (not illustrated) and a nonvolatile memory (not illustrated), which are computer-readable storage media. The volatile memory is, for example, a RAM (Random Access Memory), or the like. The nonvolatile memory, for example, is a ROM (Read Only Memory), a flash memory, or the like. For example, data and the like are stored in the volatile memory. For example, programs, tables, maps, and the like are stored in the nonvolatile memory. At least a portion of the storage unit 64 may be provided in the aforementioned processor, integrated circuit, or the like. At least a portion of the storage unit 64 may be mounted on a device connected to the wire electric discharge machine 10 via a network.

The resistivity value acquisition unit 66 acquires the resistivity value of the working fluid in the clean water tank 22 measured by the resistivity value measurement unit 46.

The sewage tank liquid level acquisition unit 68 acquires the liquid level in the sewage tank 20 measured by the sewage tank liquid level measurement unit 36.

The work pan liquid level acquisition unit 69 acquires the liquid level in the work pan 18 measured by the work pan liquid level measurement unit 37.

The valve control unit 70 controls the first valve 52 and the second valve 58 of the water supply device 16 based on the resistivity value [Ωm] of the working fluid in the clean water tank 22 and the liquid level of the sewage tank 20. As a result, the liquid level of the working fluid in the sewage tank 20 rises. The resistivity value [Ωm] of the working fluid in the clean water tank 22 increases. The valve control unit 70 corresponds to the control unit of the present invention.

### [Water Supply Control Process]

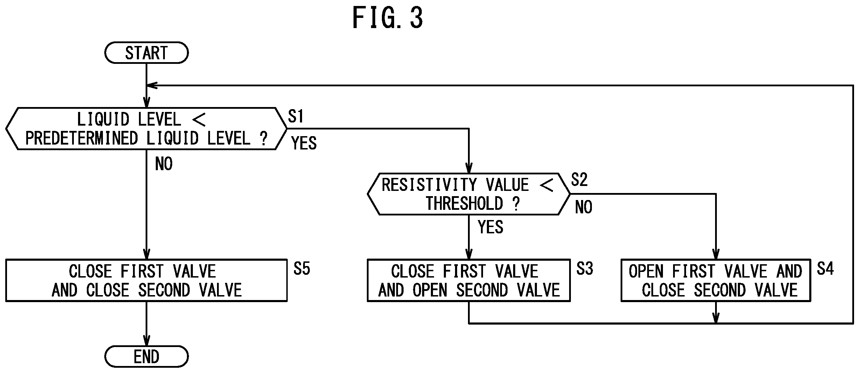

FIG. 3 is a flowchart showing a water supply control process executed by the water supply control unit 60. The water supply control process is repeatedly executed at regular time intervals.

In step S1, the valve control unit 70 determines whether or not the liquid level in the sewage tank 20 measured by the sewage tank liquid level measurement unit 36 is lower than a predetermined liquid level. If the liquid level is lower than the predetermined liquid level (step S1: YES), the process proceeds to step S2. If the liquid level is equal to or higher than the predetermined liquid level (step S1: NO), the process proceeds to step S5.

In step S2, the valve control unit 70 determines whether or not the resistivity value [Ωm] of the working fluid in the clean water tank 22 measured by the resistivity value measurement unit 46 is less than a threshold. If the resistivity value [Ωm] is less than the threshold (step S2: YES), the process proceeds to step S3. If the resistivity value [Ωm] is equal to or greater than the threshold (step S2: NO), the process proceeds to step S4. The threshold may be a value equal to the predetermined value for the resistivity value [Ωm] described above. The threshold may be a value smaller than the predetermined value for the resistivity value [Ωm] described above.

In step S3, the valve control unit 70 controls the first valve 52 to close the first valve 52. The valve control unit 70 controls the second valve 58 to open the second valve 58. Thereafter, the process returns to step S1. Incidentally, when the first valve 52 is in a closed state before the processing of step S3, the first valve 52 is maintained in the closed state. If the second valve 58 is in an open state before the processing of step S3, the second valve 58 is maintained in the open state.

In step S4, the valve control unit 70 controls the first valve 52 to open the first valve 52. The valve control unit 70 controls the second valve 58 to close the second valve 58. Thereafter, the process returns to step S1. Incidentally, when the first valve 52 is in an opened state before the processing of step S4, the first valve 52 is maintained in the opened state. If the second valve 58 is in a closed state before the processing of step S4, the second valve 58 is maintained in the closed state.

In step S5, the valve control unit 70 controls the first valve 52 to close the first valve 52. The valve control unit 70 controls the second valve 58 to close the second valve 58. Thereafter, the water supply control process is ended. Incidentally, when the first valve 52 is in a closed state before the processing of step S5, the first valve 52 is maintained in the closed state. If the second valve 58 is in a closed state before the processing of step S5, the second valve 58 is maintained in the closed state.

### [Operations and Effects]

When the working fluid in the wire electric discharge machine 10 decreases, water is supplied from the outside of the wire electric discharge machine 10 to the clean water tank 22. When water is added to the working fluid, the resistivity value [Ωm] of the working fluid decreases. Therefore, before the electric discharge machining is started, it is necessary to increase the resistivity value [Ωm] of the working fluid by circulating the working fluid between the clean water tank 22 and the ion exchange unit 24. As a result, there is a problem that a period of time from when water is added to the working fluid to when electric discharge machining is started lengthens.

When water is supplied directly to the ion exchange unit 24 and the water that has passed through the ion exchange resin is sent from the ion exchange unit 24 to the clean water tank 22, the resistivity value [Ωm] can be increased more quickly than when the working fluid is circulated between the clean water tank 22 and the ion exchange unit 24 while water is being supplied directly to the clean water tank 22.

Therefore, the water supply device 16 of the present embodiment includes the second water supply path 56 for supplying water from the outside of the wire electric discharge machine 10 to the ion exchange unit 24, separately from the first water supply path 50 for supplying water from the outside of the wire electric discharge machine 10 to the clean water tank 22. Thus, when water is supplied to the wire electric discharge machine 10 from the outside of the wire electric discharge machine 10, the water supply device 16 can shorten the time required to increase the resistivity value [Ωm] of the working fluid to the predetermined value.

In the water supply device 16 of the present embodiment, the water supply control unit 60 opens and closes the first valve 52 and the second valve 58 based on the resistivity value [Ωm] of the working fluid and the liquid level in the sewage tank 20. Thus, the water supply device 16 can increase the resistivity value [Ωm] of the working fluid while raising the liquid level in the sewage tank 20.

### [Second Embodiment]

The present embodiment differs from the first embodiment in the content of the water supply control process.

### [Water Supply Control Process]

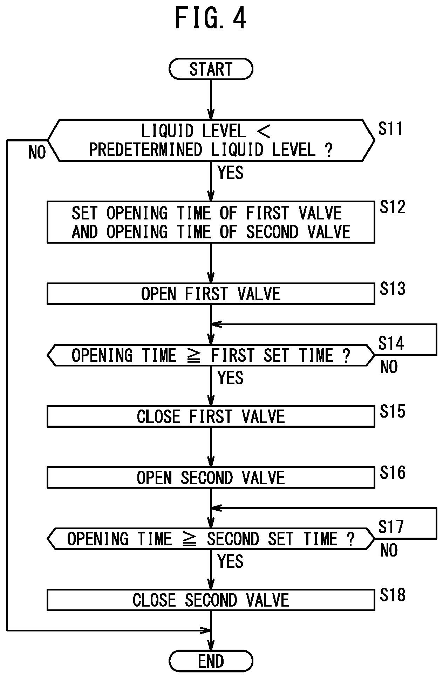

FIG. 4 is a flowchart showing a water supply control process executed by the water supply control unit 60. The water supply control process is repeatedly executed at regular time intervals.

In step S11, the valve control unit 70 determines whether or not the liquid level in the sewage tank 20 measured by the sewage tank liquid level measurement unit 36 is lower than a predetermined liquid level. If the liquid level is lower than the predetermined liquid level (step S11: YES), the process proceeds to step S12. If the liquid level is equal to or higher than the predetermined liquid level (step S11: NO), the water supply control process is terminated.

In step S12, the valve control unit 70 sets the opening time of the first valve 52 based on the resistivity value [Ωm] of the working fluid in the clean water tank 22, the liquid level of the sewage tank 20, and the liquid level of the work pan 18. The valve control unit 70 sets the opening time of the second valve 58 based on the resistivity value [Ωm] of the working fluid in the clean water tank 22, the liquid level of the sewage tank 20, and the liquid level of the work pan 18. Thereafter, the process transitions to step S13.

The opening time of the first valve 52 and the opening time of the second valve 58 are set based on the difference between the total of the amount of the working fluid currently stored in the sewage tank 20 and the amount of the working fluid currently stored in the work pan 18 and the capacity of the sewage tank 20 capable of storing the working fluid. The difference may be hereinafter referred to as a required water supply amount. The amount of the working fluid currently stored in the sewage tank 20 is obtained from the current liquid level in the sewage tank 20 measured by the sewage tank liquid level measurement unit 36. The amount of the working fluid currently stored in the work pan 18 is obtained from the current liquid level in the work pan 18 measured by the work pan liquid level measurement unit 37.

The opening time of the first valve 52 and the opening time of the second valve 58 are set based on the difference between the resistivity value [Ωm] of water before passing through the ion exchange resin of the ion exchange unit 24 and the resistivity value [Ωm] of the water after passing through the ion exchange resin. The difference may be hereinafter referred to as an amount of increase in resistivity value. The resistivity value [Ωm] of water before passing through the ion exchange resin of the ion exchange unit 24 and the resistivity value [Ωm] of water after passing through the ion exchange resin are measured in advance. The valve control unit 70 sets the opening time of the first valve 52 and the opening time of the second valve 58, based on the required water supply amount and the amount of increase in resistivity value, such that the resistivity value [Ωm] of the working fluid in the clean water tank 22 approaches a predetermined value.

Hereinafter, the set opening time of the first valve 52 may be referred to as a first set time. The set opening time of the second valve 58 may be referred to as a second set time.

In step S13, the valve control unit 70 opens the first valve 52. At this time, the second valve 58 is in a closed state. Thereafter, the process transitions to step S14.

In step S14, the valve control unit 70 determines whether or not the time (opening time) during which the first valve 52 is opened is equal to or longer than the first set time. When the opening time of the first valve 52 is equal to or longer than the first set time (step S14: YES), the process proceeds to step S15. When the opening time of the first valve 52 is less than the first set time (step S14: NO), the determination of step S14 is repeated.

In step S15, the valve control unit 70 closes the first valve 52. At this time, the second valve 58 is in a closed state. Thereafter, the process transitions to step S16.

In step S16, the valve control unit 70 opens the second valve 58. At this time, the first valve 52 is in a closed state. Thereafter, the process transitions to step S17.

In step S17, the valve control unit 70 determines whether or not the time (opening time) during which the second valve 58 is opened is equal to or longer than the second set time. When the opening time of the second valve 58 is equal to or longer than the second set time (step S17: YES), the process proceeds to step S18. When the opening time of the first valve 52 is less than the second set time (step S17: NO), the determination of step S17 is repeated.

In step S18, the valve control unit 70 closes the second valve 58. At this time, the first valve 52 is in a closed state. Thereafter, the water supply control process is ended.

### [Operations and Effects]

In the water supply device 16 of the present embodiment, when the liquid level of the sewage tank 20 is lower than the predetermined liquid level, the water supply control unit 60 sets the opening time of the first valve 52 (first set time) and the opening time of the second valve 58 (second set time) based on the resistivity value [Ωm] of the working fluid in the clean water tank 22 and the liquid level of the sewage tank 20. The water supply control unit 60 controls the first valve 52 and the second valve 58 to open the first valve 52 and close the second valve 58. Thereafter, when the first set time has elapsed, the water supply control unit 60 closes the first valve 52 and opens the second valve 58. Thereafter, when the second set time has elapsed, the water supply control unit 60 closes the second valve 58. Thus, the water supply device 16 can increase the resistivity value [Ωm] of the working fluid while raising the liquid level in the sewage tank 20.

### [Third Embodiment]

The present embodiment differs from the first embodiment in the content of the water supply control process.

### [Water Supply Control Process]

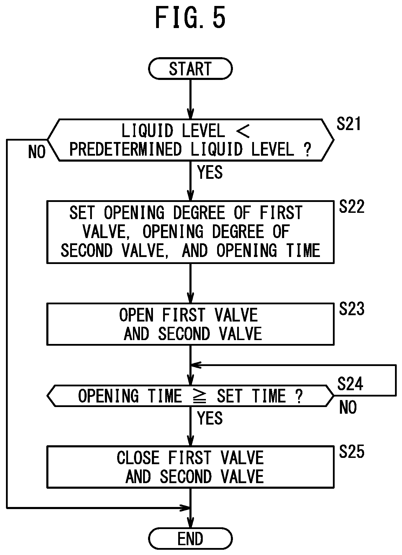

FIG. 5 is a flowchart showing the water supply control process executed by the water supply control unit 60. The water supply control process is repeatedly executed at regular time intervals.

In step S21, the valve control unit 70 determines whether or not the liquid level in the sewage tank 20 measured by the sewage tank liquid level measurement unit 36 is lower than a predetermined liquid level. If the liquid level is lower than the predetermined liquid level (step S21: YES), the process proceeds to step S22. If the liquid level is equal to or higher than the predetermined liquid level (step S21: NO), the water supply control process is terminated.

In step S22, the valve control unit 70 sets the opening degree of the first valve 52 based on the resistivity value [Ωm] of the working fluid in the clean water tank 22, the liquid level of the sewage tank 20, and the liquid level of the work pan 18. The valve control unit 70 sets the opening degree of the second valve 58 based on the resistivity value [Ωm] of the working fluid in the clean water tank 22, the liquid level of the sewage tank 20, and the liquid level of the work pan 18. The valve control unit 70 sets an opening time that is common to the first valve 52 and the second valve 58, based on the resistivity value [Ωm] of the working fluid in the clean water tank 22, the liquid level of the sewage tank 20, and the liquid level of the work pan 18. Thereafter, the process transitions to step S23.

The opening degree of the first valve 52, the opening degree of the second valve 58, and the opening time are set based on the difference between the total of the amount of the working fluid currently stored in the sewage tank 20 and the amount of the working fluid currently stored in the work pan 18 and the capacity of the sewage tank 20 capable of storing the working fluid. The difference may be hereinafter referred to as a required water supply amount. The amount of the working fluid currently stored in the sewage tank 20 is obtained from the current liquid level in the sewage tank 20 measured by the sewage tank liquid level measurement unit 36. The amount of the working fluid currently stored in the work pan 18 is obtained from the current liquid level in the work pan 18 measured by the work pan liquid level measurement unit 37.

The opening degree of the first valve 52, the opening degree of the second valve 58, and the opening time are set based on the difference between the resistivity value [Ωm] of water before passing through the ion exchange resin of the ion exchange unit 24 and the resistivity value [Ωm] of the water after passing through the ion exchange resin. The difference may be hereinafter referred to as an amount of increase in resistivity value. The resistivity value [Ωm] of water before passing through the ion exchange resin of the ion exchange unit 24 and the resistivity value [Ωm] of water after passing through the ion exchange resin are measured in advance. The valve control unit 70 sets the opening degree of the first valve 52, the opening degree of the second valve 58, and the opening time such that the resistivity value [Ωm] of the working fluid in the clean water tank 22 approaches a predetermined value, based on the required water supply amount and the amount of increase in resistivity value.

Hereinafter, the opening time that has been set commonly to the first valve 52 and the second valve 58 may be referred to as a set time.

In step S23, the valve control unit 70 opens the first valve 52 and the second valve 58. At this time, the first valve 52 is set to the opening degree set in step S22. The second valve 58 is set to the opening degree set in step S22. Thereafter, the process transitions to step S24.

In step S24, the valve control unit 70 determines whether or not the time (opening time) during which the first valve 52 and the second valve 58 are opened is equal to or longer than the set time. When the opening time of the first valve 52 and the second valve 58 is equal to or longer than the set time (step S24: YES), the process proceeds to step S25. When the opening time of the first valve 52 and the second valve 58 is less than the set time (step S24: NO), the determination of step S24 is repeated.

In step S25, the valve control unit 70 closes the first valve 52 and the second valve 58. Thereafter, the water supply control process is ended.

### [Operations and Effects]

In the water supply device 16 of the present embodiment, when the liquid level of the sewage tank 20 is lower than the predetermined liquid level, the water supply control unit 60 sets the opening degree of the first valve 52, the opening degree of the second valve 58, and the opening time common to the first valve 52 and the second valve 58, based on the resistivity value [Ωm] of the working fluid in the clean water tank 22 and the liquid level of the sewage tank 20. The water supply control unit 60 opens the first valve 52 to the opening degree set for the first valve 52. The water supply control unit 60 opens the second valve 58 to the opening degree set for the second valve 58. Thereafter, when the set opening time has elapsed, the water supply control unit 60 closes the first valve 52 and the second valve 58. Thus, the water supply device 16 can increase the resistivity value [Ωm] of the working fluid while raising the liquid level in the sewage tank 20.

### [Modifications]

In the first to third embodiments, the first water supply path 50 is connected to the clean water tank 22. However, the first water supply path 50 may be connected to the sewage tank 20 or the work pan 18.

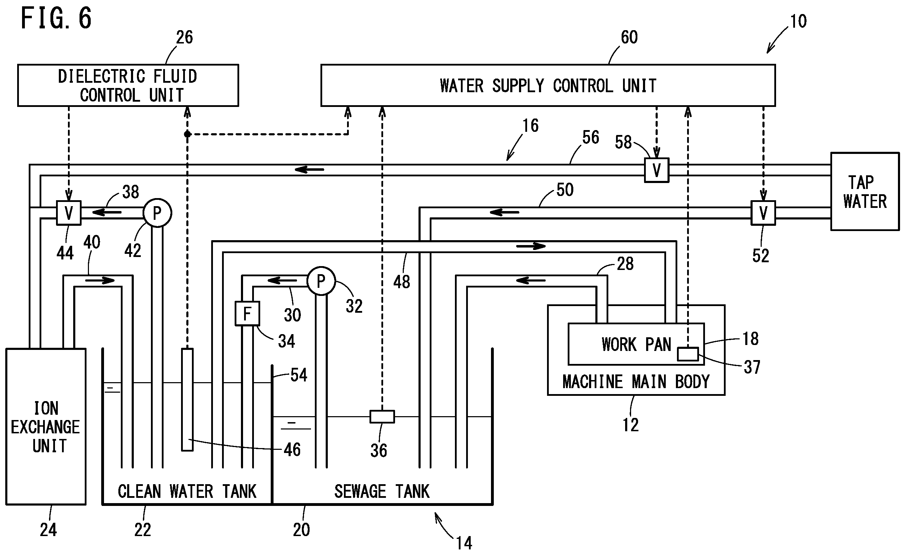

FIG. 6 is a schematic diagram showing a wire electric discharge machine 10. The first water supply path 50 is connected to the sewage tank 20. Tap water is supplied to the sewage tank 20 from the outside of the wire electric discharge machine 10 via the first water supply path 50.

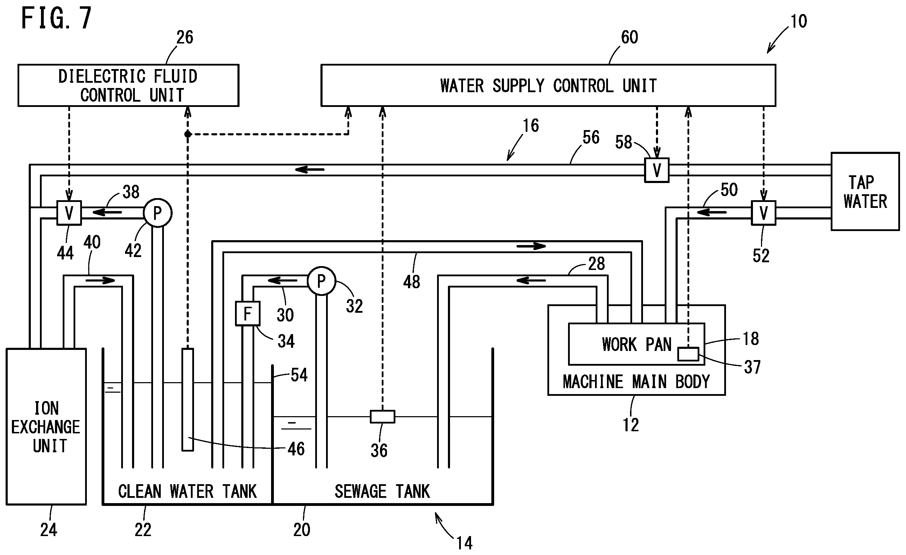

FIG. 7 is a schematic diagram showing a wire electric discharge machine 10. A first water supply path 50 is connected to the work pan 18. Tap water is supplied to the work pan 18 from the outside of the wire electric discharge machine 10 via the first water supply path 50.

The following Supplementary Notes are further disclosed in relation to the above embodiments and modifications.

### (Supplementary Note 1)

The water supply device (16) automatically supplies water to the electric discharge machine (10). The water supply device includes the first water supply path (50) configured to supply water from the outside of the electric discharge machine to at least one of the clean water tank (22), the sewage tank (20), or the work pan (18) of the electric discharge machine; the first valve (52) configured to open and close the first water supply path; the second water supply path (56) configured to supply water from the outside of the electric discharge machine to the ion exchange unit (24) including the ion exchange resin provided in the electric discharge machine; the second valve (58) configured to open and close the second water supply path; and the circulation path (40) configured to send the working fluid from the ion exchange unit to the clean water tank. Thus, when water is supplied from the outside of the electric discharge machine to the electric discharge machine, the water supply device can shorten the time required to raise the resistivity value of the working fluid to a predetermined value.

### (Supplementary Note 2)

The water supply device according to Supplementary Note 1 may further include the resistivity value acquisition unit (66) configured to acquire the resistivity value of the working fluid; the sewage tank liquid level acquisition unit (68) configured to acquire the liquid level in the sewage tank; the work pan liquid level acquisition unit (69) configured to acquire the liquid level in the work pan; and the control unit (70) configured to open and close the first valve and the second valve based on the resistivity value, the liquid level in the sewage tank, and the liquid level in the work pan. Thus, the water supply device can increase the resistivity value of the working fluid while raising the liquid level in the sewage tank.

### (Supplementary Note 3)

In the water supply device according to Supplementary Note 2, in a case that the liquid level is lower than the predetermined liquid level, the control unit may be configured to: set the opening time of each of the first valve and the second valve based on the resistivity value and the liquid level; control the first valve and the second valve to open one of the first valve or the second valve and close the other one of the first valve or the second valve; thereafter, when the opening time set for the one of the first valve or the second valve has elapsed, close the one of the first valve or the second valve and open the other one of the first valve or the second valve; and thereafter, when the opening time set for the other one of the first valve or the second valve has elapsed, close the other one of the first valve or the second valve. Thus, the water supply device can increase the resistivity value of the working fluid while raising the liquid level in the sewage tank.

### (Supplementary Note 4)

In the water supply device according to Supplementary Note 2, in a case that the liquid level is lower than the predetermined liquid level, the control unit may be configured to: set the opening degree of each of the first valve and the second valve and the opening time that is common to the first valve and the second valve, based on the resistivity value and the liquid level; control the first valve and the second valve to open the first valve at the opening degree that has been set and open the second valve at the opening degree that has been set; and thereafter, when the opening time that has been set has elapsed, close the first valve and the second valve. Thus, the water supply device can increase the resistivity value of the working fluid while raising the liquid level in the sewage tank.

### (Supplementary Note 5)

The method controls the water supply device that automatically supplies water to the electric discharge machine. The water supply device includes: the first water supply path configured to supply water from the outside of the electric discharge machine to at least one of the clean water tank, the sewage tank, or the work pan of the electric discharge machine; the first valve configured to open and close the first water supply path; the second water supply path configured to supply water from the outside of the electric discharge machine to the ion exchange unit including an ion exchange resin provided in the electric discharge machine; the second valve configured to open and close the second water supply path; and the circulation path configured to send the working fluid from the ion exchange unit to the clean water tank. The method includes: the resistivity value acquisition step of acquiring the resistivity value of the working fluid; the sewage tank liquid level acquisition step of acquiring the liquid level in the sewage tank; the work pan liquid level acquisition step of acquiring the liquid level in the work pan; and the control step of opening and closing the first valve and the second valve based on the resistivity value, the liquid level in the sewage tank, and the liquid level in the work pan. Thus, the water supply device can increase the resistivity value of the working fluid while raising the liquid level in the sewage tank.

### (Supplementary Note 6)

In the method for controlling the water supply device according to Supplementary Note 5, in a case that the liquid level is lower than the predetermined liquid level, the control step may include: setting the opening time of each of the first valve and the second valve based on the resistivity value and the liquid level; controlling the first valve and the second valve to open one of the first valve or the second valve and close the other one of the first valve or the second valve; thereafter, when the opening time set for the one of the first valve or the second valve has elapsed, closing the one of the first valve or the second valve and opening the other one of the first valve or the second valve; and thereafter, when the opening time set for the other one of the first valve or the second valve has elapsed, closing the other one of the first valve or the second valve. Thus, the water supply device can increase the resistivity value of the working fluid while raising the liquid level in the sewage tank.

### (Supplementary Note 7)

In the method of controlling the water supply device according to Supplementary Note 5, in a case that the liquid level is lower than the predetermined liquid level, the control step may include: setting the opening degree of each of the first valve and the second valve and the opening time that is common to the first valve and the second valve, based on the resistivity value and the liquid level; controlling the first valve and the second valve to open the first valve at the opening degree that has been set and open the second valve at the opening degree that has been set; and thereafter, when the opening time that has been set has elapsed, closing the first valve and the second valve. Thus, the water supply device can increase the resistivity value of the working fluid while raising the liquid level in the sewage tank.

Although the embodiments of the present disclosure have been described in detail, the present disclosure is not limited to the above-described embodiments. Various additions, substitutions, modifications, partial deletions, and the like can be made to these embodiments without departing from the essence and gist of the invention, or without departing from the idea and purpose of the present invention derived from the content described in the claims and equivalents thereof. For example, in the above-described embodiments, the order of operations and the order of processes are shown as examples, and the present invention is not limited to them. The same applies to a case where numerical values or mathematical equations are used in the description of the above-described embodiments.

### REFERENCE SIGNS LIST

10: wire electric discharge machine (electric discharge machine)
16: water supply device
18: work pan
20: sewage tank
22: clean water tank
24: ion exchange unit
40: second circulation path (circulation path)
50: first water supply path
52: first valve
56: second water supply path
58: second valve
66: resistivity value acquisition unit
68: sewage tank liquid level acquisition unit
69: work pan liquid level acquisition unit
70: valve control unit (control unit)

## Claims

1. A water supply device for automatically supplying water to an electric discharge machine, the water supply device comprising:
a first water supply path configured to supply water from an outside of the electric discharge machine to at least one of a clean water tank, a sewage tank, or a work pan of the electric discharge machine;
a first valve configured to open and close the first water supply path;
a second water supply path configured to supply water from the outside of the electric discharge machine to an ion exchange unit including an ion exchange resin provided in the electric discharge machine;
a second valve configured to open and close the second water supply path; and
a circulation path configured to send a working fluid from the ion exchange unit to the clean water tank.

2. The water supply device according to claim 1, further comprising:
a resistivity value acquisition unit configured to acquire a resistivity value of the working fluid;
a sewage tank liquid level acquisition unit configured to acquire a liquid level in the sewage tank;
a work pan liquid level acquisition unit configured to acquire a liquid level in the work pan; and
a control unit configured to open and close the first valve and the second valve based on the resistivity value, the liquid level in the sewage tank, and the liquid level in the work pan.

3. The water supply device according to claim 2, wherein, in a case that the liquid level is lower than a predetermined liquid level,
the control unit is configured to:
set an opening time of each of the first valve and the second valve based on the resistivity value and the liquid level;
control the first valve and the second valve to open one of the first valve or the second valve and close another one of the first valve or the second valve;
thereafter, when the opening time set for the one of the first valve or the second valve has elapsed, close the one of the first valve or the second valve and open the other one of the first valve or the second valve; and
thereafter, when the opening time set for the other one of the first valve or the second valve has elapsed, close the other one of the first valve or the second valve.

4. The water supply device according to claim 2, wherein, in a case that the liquid level is lower than a predetermined liquid level,
the control unit is configured to:
set an opening degree of each of the first valve and the second valve and an opening time that is common to the first valve and the second valve, based on the resistivity value and the liquid level;
control the first valve and the second valve to open the first valve at the opening degree that has been set and open the second valve at the opening degree that has been set; and
thereafter, when the opening time that has been set has elapsed, close the first valve and the second valve.

5. A method for controlling a water supply device that automatically supplies water to an electric discharge machine, wherein
the water supply device includes:
a first water supply path configured to supply water from an outside of the electric discharge machine to at least one of a clean water tank, a sewage tank, or a work pan of the electric discharge machine;
a first valve configured to open and close the first water supply path;
a second water supply path configured to supply water from the outside of the electric discharge machine to an ion exchange unit including an ion exchange resin provided in the electric discharge machine;
a second valve configured to open and close the second water supply path; and
a circulation path configured to send a working fluid from the ion exchange unit to the clean water tank,
the method comprising:
a resistivity value acquisition step of acquiring a resistivity value of the working fluid;
a sewage tank liquid level acquisition step of acquiring a liquid level in the sewage tank;
a work pan liquid level acquisition step of acquiring a liquid level in the work pan; and
a control step of opening and closing the first valve and the second valve based on the resistivity value, the liquid level in the sewage tank, and the liquid level in the work pan.

6. The method for controlling the water supply device, according to claim 5, wherein, in a case that the liquid level is lower than a predetermined liquid level,
the control step comprises:
setting an opening time of each of the first valve and the second valve based on the resistivity value and the liquid level;
controlling the first valve and the second valve to open one of the first valve or the second valve and close another one of the first valve or the second valve;
thereafter, when the opening time set for the one of the first valve or the second valve has elapsed, closing the one of the first valve or the second valve and opening the other one of the first valve or the second valve; and
thereafter, when the opening time set for the other one of the first valve or the second valve has elapsed, closing the other one of the first valve or the second valve.

7. The method for controlling the water supply device, according to claim 5, wherein, in a case that the liquid level is lower than a predetermined liquid level,
the control step comprises:
setting an opening degree of each of the first valve and the second valve and an opening time that is common to the first valve and the second valve, based on the resistivity value and the liquid level;
controlling the first valve and the second valve to open the first valve at the opening degree that has been set and open the second valve at the opening degree that has been set; and
thereafter, when the opening time that has been set has elapsed, closing the first valve and the second valve.
